Europäisches Patentamt

European Patent Office

Office européen des brevets

(19)

(11) Veröffentlichungsnummer : **0 332 811 B1**

# EUROPÄISCHE PATENTSCHRIFT

(12)

(45) Veröffentlichungstag der Patentschrift :
**12.06.91 Patentblatt 91/24**

(51) Int. Cl.⁵ : **B60J 7/12**

(21) Anmeldenummer : **89100915.1**

(22) Anmeldetag : **20.01.89**

(54) Faltverdeck eines Kraftfahrzeugs.

(30) Priorität : **18.03.88 DE 3809197**

(43) Veröffentlichungstag der Anmeldung :
**20.09.89 Patentblatt 89/38**

(45) Bekanntmachung des Hinweises auf die
Patenterteilung :
**12.06.91 Patentblatt 91/24**

(84) Benannte Vertragsstaaten :
**DE ES FR GB IT**

(56) Entgegenhaltungen :
**DE-C- 878 309**
**DE-C- 3 405 920**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **König, Johann
Bulachstrasse 33
W-8066 Günding (DE)**

## Beschreibung

Die Erfindung betrifft ein Faltverdeck eines Kraftfahrzeugs, mit den im Oberbegriff des Hauptanspruchs angebenen Merkmalen.

Ein derartiges Faltverdeck ist bereits aus der DE-A 34 05 920 bekannt. Dieses weist zwischen dem vorderen Querspriegel und je einem seitlichen Hauptlenker einen vorderen und einen hinteren Dachlenker auf, die gelenkig miteinander verbunden sind. Jeweils ein zusätzlicher seitlicher Lenker ist vorne mit dem vorderen Dachlenker und hinten mit einer schwenkbaren Hauptsäule gelenkig verbunden. Bei Nichtgebrauch läßt sich das Faltverdeck mit dem platzsparend zusammengeklappten Verdeckgestänge in ein hinteres Aufnahmefach einschwenken. Besonders nachteilig ist, daß das Verdeckgestänge des Faltverdecks nur eine verhältnismäßig geringe Stabilität aufweist. Beim Öffnen und Schließen des Faltverdecks werden die stabförmigen Elemente des Verdeckgestänges durch Fertigungsungenauigkeiten ungleich belastet und leicht verformt, so daß der Bewegungsablauf ungleichmäßig verläuft. An dem Verdeckgestänge können neben dem Stoff des Faltverdecks nur solche zusätzlichen Bauteile abgestützt werden, die das Faltverdeck allenfalls gering belasten.

Der Erfindung liegt die Aufgabe zugrunde, ein Faltverdeck nach dem Oberbegriff des Hauptanspruchs anzugeben, das eine größere Stabilität im Dachbereich aufweist, so daß daran auch größere Bauteile abgestützt werden können.

Diese Aufgabe ist durch die Merkmale im kennzeichnenden Teil des Hauptanspruchs gelöst. Besonders vorteilhaft ist, daß durch den Tragrahmen ein stabiles, annähernd über die gesamte Fahrzeugbreite verlaufendes Bauteil gebildet ist, das durch seine Steifigkeit den Bewegungsablauf des Faltverdecks beim Öffnen und Schließen verbessert. Der Tragrahmen kann auch zur Abstützung größerer Bauteile verwendet werden. Beispielsweise können die Tragarme eines in Schließstellung über dem Faltverdeck angeordneten Gepäckträgers, die entsprechende Öffnungen im Faltverdeck durchdringen, mit dem Tragrahmen verbunden werden. Es ist auch vorgesehen, daß der Tragrahmen ein Solardach oder ein Schiebe-, Hebe- oder Schiebehebedach aufnimmt, das einer Dachöffnung im Faltverdeck zugeordnet ist. Die Erhöhung der Steifigkeit des Faltverdecks im Dachbereich erfordert lediglich eine Verbindung der Längslenker zu einem Tragrahmen. Dieser kann auf einfache Weise durch ein mit Verstärkungselementen verbundenes Blechformteil gebildet sein. An der Innenseite des Tragrahmens kann ein Stoff- oder Formhimmel befestigt werden.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen :

Figur 1 ein erstes Ausführungsbeispiel in einer Seitenansicht der hinteren, in verschiedenen Stellungen des Faltverdecks dargestellten Verdeckgestängeelemente,

Figur 2 ein seitlicher Ausschnitt des Tragrahmens in Draufsicht des Verdeckgestänges in Figur 1,

Figur 3 ein Querschnitt eines Seitenbereiches des Tragrahmens gemäß Figur 2,

Figur 4 ein zweites Ausführungsbeispiel in einer Figur 1 entsprechenden Ansicht,

Figur 5 das in Figur 4 dargestellte Verdeckgestänge in einer Figur 2 entsprechenden Ansicht,

Figur 6 ein vertikaler Längsschnitt durch den vorderen Bereich des Tragrahmens in Figur 5,

Figur 7 eine der Schnittlinie VII-VII in Figur 5 entsprechende Schnittansicht,

Figur 8 eine der Schnittlinie VIII-VIII in Figur 5 entsprechende Schnittansicht und

Figur 9 eine der Schnittlinie IX-IX in Figur 5 entsprechende Schnittansicht.

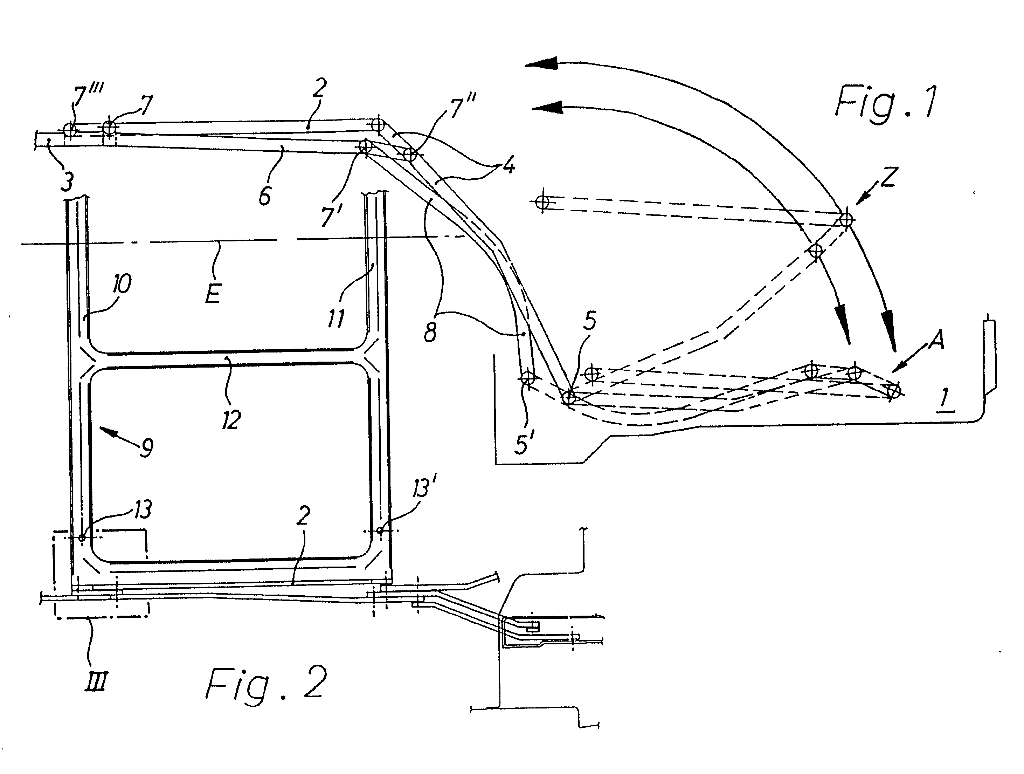

Das Faltverdeck eines Kraftfahrzeugs weist in einem ersten Ausführungsbeispiel das in Figur 1 in Seitenansicht dargestellte Verdeckgestänge auf, das sich in Schließstellung des Faltverdecks in der durch ausgezogene Linien dargestellten Lage befindet. Bei Nichtgebrauch kann das Faltverdeck mit seinem Verdeckgestänge in ein hinteres Aufnahmefach 1 vollständig eingebracht werden. Um den Bewegungsablauf beim Einbringen in das Aufnahmefach zu verdeutlichen, sind einzelne Elemente des Faltverdecks in einer Zwischenstellung Z und in der Aufbewahrungsstellung A im Aufnahmefach 1 dargestellt. Das Faltverdeck ist zur vertikalen Fahrzeugmittelebene symmetrisch ausgebildet. Bei dem Ausführungsbeispiel weist das in Figur 1 unvollständig dargestellte Verdeckgestänge zwei im Dachbereich seitlich gegenüberliegende Lenker 2 auf, die in der dargestellten Schließstellung des Faltverdecks etwa in Fahrzeuglängsrichtung verlaufen. Jeder Lenker 2, von denen in Figur 1 aufgrund der Symmetrie des Faltverdecks nur ein Lenker 2 sichtbar ist, ist vorne in einem Gelenk 7''' mit dem hinteren oberen Bereich eines seitlich angeordneten vorderen Dachlenkers 3 und hinten mit dem oberen Bereich einer Hauptsäule 4 gelenkig verbunden. Die Hauptsäule 4 ist mit ihrem nach unten gerichteten Ende im vorderen seitlichen Bereich des Aufnahmefaches 1 um eine Querachse 5 schwenkbar an der Karosserie des Fahrzeugs angeordnet. Die vorderen Dachlenker 3 sind jeweils vorne mit einem nicht dargestellten vorderen Querspriegel verbunden, der annähernd über die gesamte Fahrzeugbreite verläuft und in Schließstellung des Faltverdecks an einem oberen Randelement der Windschutzscheibe anliegt. Jeder vordere Dachlenker 3 ist an einem hinteren Dachlenker 6 durch ein Gelenk 7 gelenkig befestigt. Der hintere Dachlenker 6 ist an seinem hinteren Bereich mit dem oberen Ende eines seitlich angeordneten Hauptlenkers 8 in einem Gelenk 7' verbunden. Jeder Hauptlenker 8 ist unten im vorderen seitlichen Bereich des Aufnahmefaches 1 um eine Querachse 5' schwenkbar an der Karosserie des Fahrzeugs befestigt. Jeweils der vordere und hintere Dachlenker 3, 6 bilden einen Übertotpunktmechanismus, der das Faltverdeck in seiner Schließstellung nach außen belastet. Bei dem Ausführungsbeispiel weist das Verdeckgestänge an den seitlichen hinteren Bereichen des Faltverdecks jeweils eine nicht dargestellte obere und untere Spannstange auf, die gelenkig verbunden weitere Übertotpunktmechanismen zum Spannen des Faltverdecks bilden. Jeweils der obere Bereich der nicht dargestellten oberen Spannstange ist um eine querverlaufende Achse schwenkbar mit dem oberen Ende der Hauptsäule 4 verbunden. Es ist auch möglich, daß jeweils das hintere Ende des Lenkers nicht direkt mit der Hauptsäule 4, sondern mit der oberen Spannstange gelenkig verbunden ist. Bei dem Ausführungsbeispiel ist der hintere Dachlenker 6 über das Gelenk 7' hinaus nach hinten verlängert und über ein Gelenk 7'' an der Hauptsäule 4 befestigt. Die Gelenke 7, 7', 7'', 7''' sind bei dem Ausführungsbeispiel um quer verlaufende Achsen schwenkbare Verbindungselemente.

Ein im Dachbereich linker Abschnitt des Verdeckgestänges ist in Figur 2 in Draufsicht dargestellt. Aufgrund der Symmetrie zur vertikalen Fahrzeugmittelebene E ist erkennbar, daß die seitlich gegenüberliegenden Lenker 2 zu einem Tragrahmen 9 verbunden sind. Der Tragrahmen 9 ist bei dem Ausführungsbeispiel aus einem mit Verstärkungselementen versehenen Blechformteil gebildet, das eine die vorderen Endbereiche der Lenker 2 verbindende vordere Querstrebe 10 und eine die hinteren Endbereiche der Lenker 2 verbindende hintere Querstrebe 11 aufweist. Die seitlichen Bereiche der vorderen und hinteren Querstrebe 10, 11 sind bei dem Ausführungsbeispiel über je eine Längsstrebe 12 verbunden, die in Fahrzeuglängsrichtung verläuft. Der Tragrahmen 9 oder ein mit dem Tragrahmen 9 verbundenes Stützglied ist der Form des geschlossenen Faltverdecks angepaßt und stützt dieses in seiner Schließstellung. Der Tragrahmen 9 weist an seinen vorderen und hinteren Seitenbereichen Befestigungsöffnungen 13, 13' auf, an denen der Tragrahmen 9 mit Tragarmen eines oberhalb des geschlossenen Faltverdecks angeordneten Gepäckträgers verbindbar ist, die entsprechende Öffnungen im Faltverdeck durchdringen. Beim Einbringen des Faltverdecks in das Aufnahmefach und beim Schließen des Faltverdecks wird der Tragrahmen 9 in Richtung der in Figur 1 angegebenen Pfeile verschwenkt, wobei der Tragrahmen 9 seine etwa horizontale Lage beibehält.

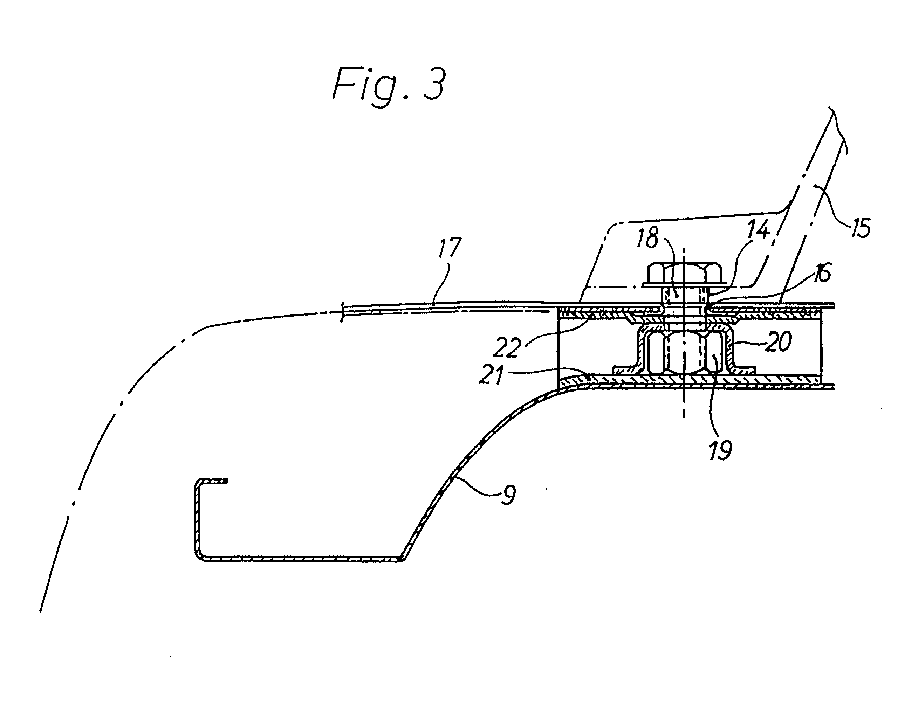

Ein Querschnitt durch die Befestigungsöffnung 13 in dem in Figur 2 durch strichpunktierte Linien gekennzeichneten Bereich III ist in Figur 3 dargestellt.

Zur Befestigung des Gepäckträgers an dem geschlossenen Faltverdeck ist jede Einschrauböffnung 14 in einem Tragarm 15 des Gepäckträgers mit der betreffenden Öffnung 16 im Stoff 17 des Faltverdecks in Übereinstimmung zu bringen, damit eine Schraube 18 in ein unter der Öffnung 16 im Tragrahmen 9 ausgebildetes Gewinde festsitzend einschraubbar ist. Bei dem Ausführungsbeispiel ist das Gewinde durch eine mit dem Tragrahmen verschweißte Schweißmutter 19 gebildet, die in einen hutförmigen Napf 20 eingeschlossen ist. Zur Verstärkung des Tragrahmens 9 ist zwischen dem Napf 20 und dem Tragrahmen 9 eine untere Verstärkungsplatte 21 angeordnet. Außerdem ist an der Oberseite des Napfes 20 eine mit einer Durchtrittsöffnung für die Schraube 18 versehene obere Befestigungsplatte 22 angeschweißt, die von unten an dem Stoff 17 des Faltverdecks anliegt und diesen stützt. Zur Befestigung des Gepäckträgers an dem Tragrahmen 9 können aber auch andere Befestigungselemente verwendet werden. Nach dem Abnehmen des Gepäckträgers sind die Öffnungen 16 im Stoff 17 des Faltverdecks von nicht dargestellten Dichtungselementen verschließbar. Diese können in die Öffnungen 16 eingeschraubt, eingesteckt oder eingeclipst werden. Bei dem Ausführungsbeispiel wird zum feuchtigkeitsdichten Verschließen der Öffnung 16 die Schraube 18 in die Schweißmutter 19 eingeschraubt und eine zwischen dem Kopf der Schraube 18 und dem Stoff 17 des Faltverdecks angeordnete, nicht dargestellte elastische Dichtungsscheibe eingeklemmt.

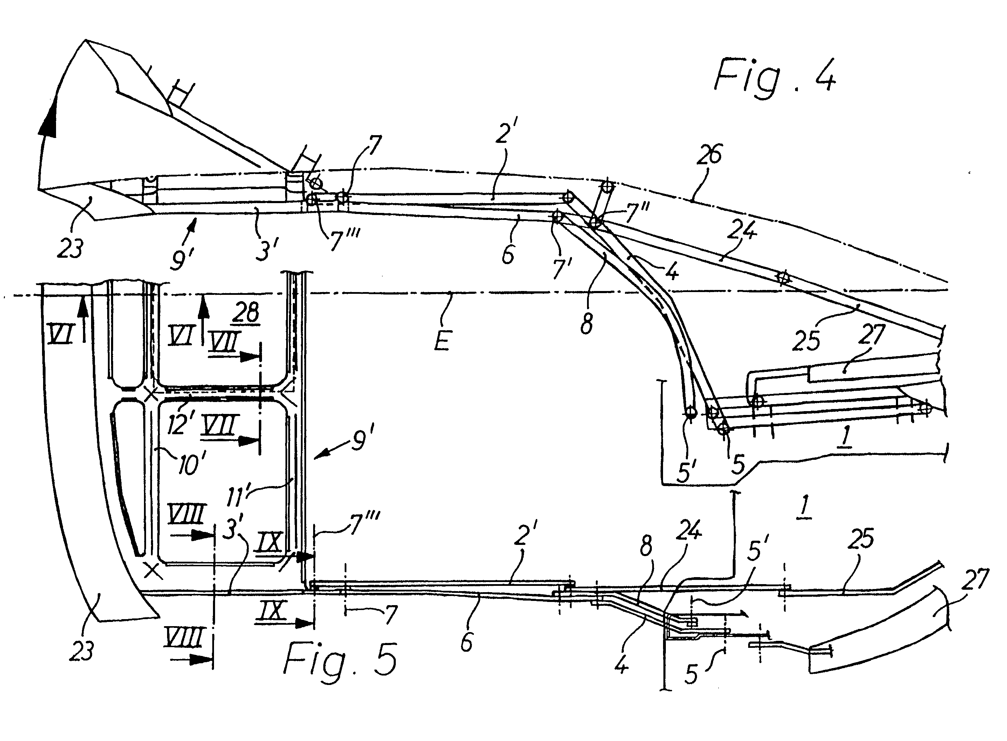

Ein zweites Ausführungsbeispiel ist in Figur 4 in einer Figur 1 entsprechenden Seitenansicht dargestellt. Das Faltverdeck und das Verdeckgestänge weist mit Ausnahme der nachfolgend angegebenen Unterschiede den selben Aufbau wie im ersten Ausführungsbeispiel auf. Die in beiden Ausführungsbeispielen gleichen Teile sind mit gleichen Bezugszeichen versehen. In Figur 4 ist der mit dem vorderen Dachlenker 3' verbundene vordere Querspriegel 23 dargestellt, der über annähernd die gesamte Fahrzeugbreite verläuft und in Schließstellung an einem oberen Randelement der Windschutzscheibe feuchtigkeitsundurchlässig anliegt. In der Figur ist auch die seitlich obere Spannstange 24 abgebildet, die mit einer unteren Spannstange 25 gelenkig verbunden ist und in der im ersten Ausführungsbeispiel angegebenen Weise einen Übertotpunktmechanismus zum Spannen des in Figur 4 durch strichpunktierte Linien dargestellten Faltverdecks 26 bildet. Bei dem zweiten Ausführungsbeispiel ist das obere Ende der oberen Spannstange 24 an der Querachse des Gelenks 7'' abgestützt, während das untere, nicht dargestellte Ende der unteren Spannstange 25 an einem schwenkbaren Spannbügel 27 gelenkig befestigt ist. An dem Spannbügel 27 ist das hintere untere Ende des Faltverdecks 26 befestigt. Im Gegensatz zu dem ersten Ausführungsbeispiel sind im zweiten Ausführungsbeispiel nicht die seitlichen Lenker 2', sondern die beiden seitlichen vorderen Dachlenker 3' zu einem Tragrahmen 9' verbunden.

In Figur 5 ist das Verdeckgestänge des geschlossenen Faltverdecks gemäß Figur 4 in einem linken Bereich in Draufsicht dargestellt. Wie aus der Figur aufgrund der Symmetrie zur vertikalen Fahrzeugmittelebene E ersichtlich ist, weist der im Ausführungsbeispiel aus einem Blechformteil gebildete und mit Verstärkungselementen versehene Tragrahmen 9' eine vordere Querstrebe 10' und eine hintere Querstrebe 11' auf. Jeweils die seitlichen Bereiche der vorderen und hinteren Querstrebe 11' sind über eine Längsstrebe 12' verbunden. In dem Bereich 28 ist an dem Tragrahmen 9' ein in Fahrzeuglängsrichtung verschiebbares und in vorderster Stellung ausstellbares Schiebehebedach befestigt, das einer entsprechenden Dachöffnung des Faltverdecks zugeordnet ist. Anstelle eines Schiebehebedaches könnte auch ein Schiebe- oder Hebedach an dem Tragrahmen 9' befestigt sein. Ebenso ist es möglich, daß ein feststehendes Solardach mit dem Tragrahmen verbunden ist. Es ist auch möglich, daß der Deckel des Schiebe- und/oder Hebedaches an seiner Oberseite spannungserzeugende Solarzellen aufweist, die elektrische Verbraucher am Fahrzeug auch dann mit Strom versorgen, wenn das Fahrzeug abgestellt ist. Beim Einbringen des Faltverdecks mit seinem Verdeckgestänge in das Aufnahmefach 1 wird der Tragrahmen 9' in Pfeilrichtung der Figur 4 auf den Kopf gestellt und in diesem Zustand im Aufnahmefach 1 abgelegt.

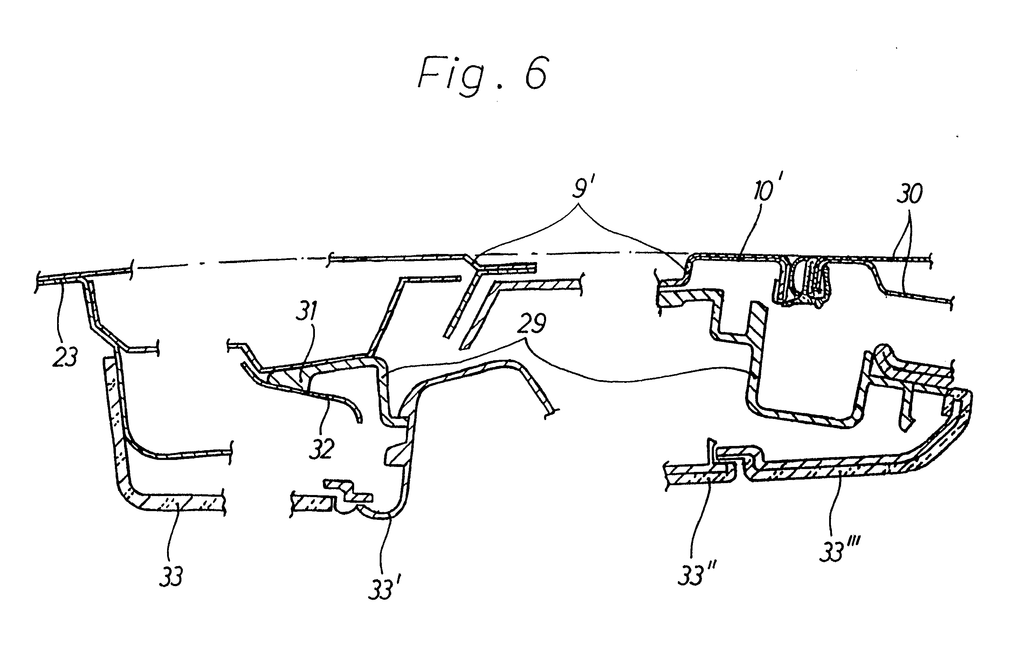

Ein vertikaler Längsschnitt durch den vorderen Bereich des Tragrahmens 9' entlang der Linie VI-VI in Figur 5 ist in Figur 6 dargestellt. Bei dem Ausführungsbeispiel ist mit dem Tragrahmen 9' eine Dachkassette 29 mit einem in Längsrichtung verschiebbaren und in vorderster Stellung ausstellbaren Deckel 30 verbunden. Zur Montageerleichterung weist die Dachkassette eine Zentriernase 31 und der Tragrahmen einen entsprechenden Einführtrichter 32 auf. In der Figur ist die vordere Querstrebe 10' des Tragrahmens 9' und der hintere Bereich des vorderen Querspriegels 23 erkennbar. An dem Tragrahmen 9' sind Verkleidungsteile 33, 33', 33'', 33''' des Fahrgasthimmels befestigt, die auch geräuschdämmend wirken.

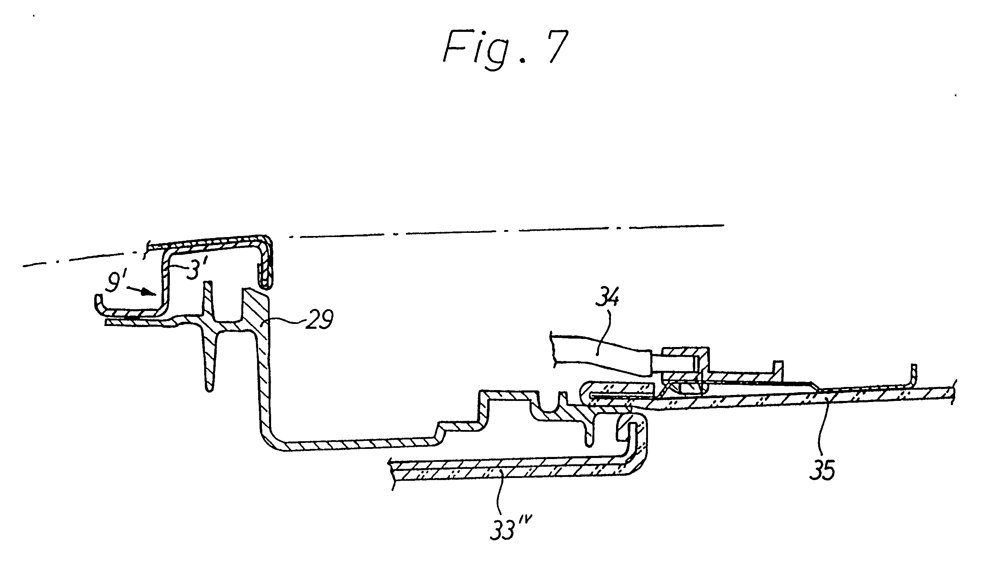

Ein Querschnitt durch den Tragrahmen 9' entlang der Linie VII-VII in Figur 5 ist in Figur 7 dargestellt. In dieser Figur ist der linke vordere Dachlenker 3' des Tragrahmens und die mit dem Tragrahmen 9' verbundene Dachkassette 29 erkennbar. Der nicht dargestellte Deckel des Schiebehebedaches ist über Hebel 34 mit einem in Fahrzeuglängsrichtung zusammen mit dem Deckel verschiebbaren Schiebehimmel 35 verbunden. Ein Verkleidungsteil 33'ᵛ ist an dem Tragrahmen 9' in nicht dargestellter Weise befestigt.

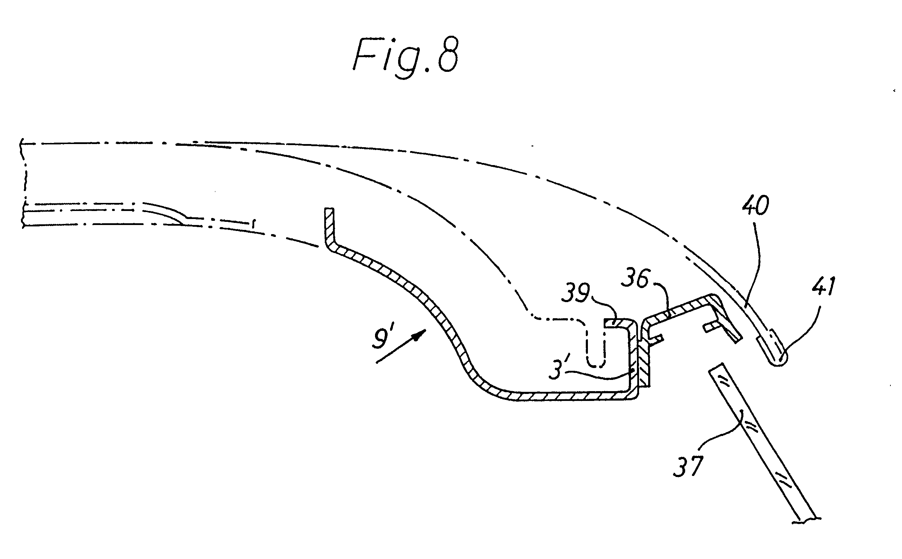

Der linke Seitenbereich des Tragrahmens 9' von Figur 5 ist in Figur 8 in einem Querschnitt entlang der in Figur 5 angegebenen Schnittlinie VIII-VIII dargestellt. Bei dem Ausführungsbeispiel ist der vordere Dachlenker 3' durch einen im Seitenbereich des Tragrahmens 9' nach oben abgewinkelten Wandabschnitt gebildet, an dem ein U-förmiger, unten offener Rahmen 36 befestigt ist. In dem Rahmen 36 ist eine nicht dargestellte Scheibendichtung angeordnet, die in Schließstellung einer an der Fahrzeugtür höhenverstellbaren Seitenscheibe 37 mit dem oberen Rand der Seitenscheibe 37 zusammenwirkt. Bei dem Ausführungsbeispiel weist der Tragrahmen 9' einen vom oberen Bereich des vorderen Dachlenkers 3' etwa horizontal nach innen abstehenden Rand 39 auf. Der Verdeckstoff 40 des Faltverdecks überdeckt die Aufnahme 36 seitlich. Der eingefaßte Seitenrand 41 des Verdeckstoffes 40 ist lediglich soweit nach unten eingezogen, daß die geschlossene Seitenscheibe 37 beim Öffnen der Fahrzeugtür an dem Seitenrand 41 vorbei bewegt werden kann.

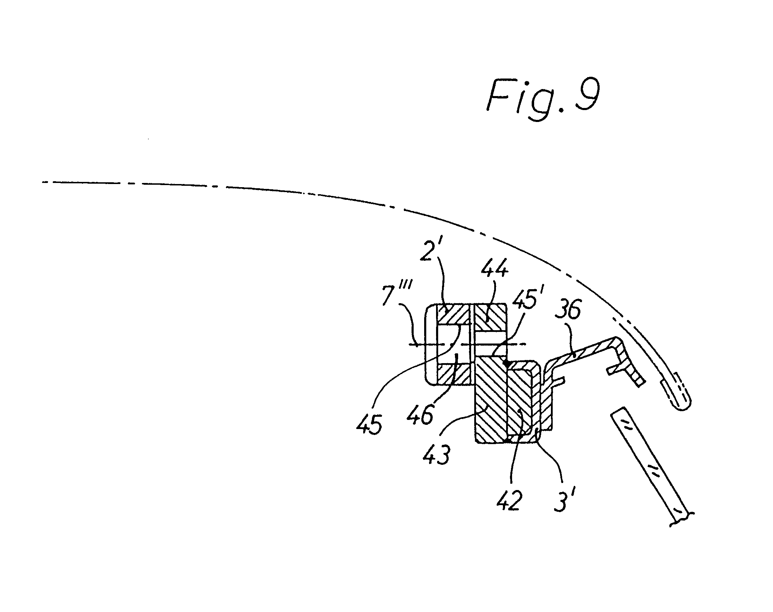

In Figur 9 ist eine Schnittansicht entlang der in Figur 5 angegebenen Schnittlinie IX-IX dargestellt. Der von dem Tragrahmen seitlich nach hinten vorstehende und mit der Aufnahme 36 verbundene vordere Dachlenker 3' ist durch eine zwischen den Schenkeln des vorderen Dachlenkers 3' angeordnete und mit den Dachlenker 3' verbundene Verstärkungsplatte 42 versteift. Die Verstärkungsplatte 42 erstreckt sich bei dem Ausführungsbeispiel so weit nach hinten, daß die in Figur 5 dargestellte Schwenkachse 7 durch die in Figur 9 angegebene Verstärkungsplatte 42 verläuft. Eine an der Innenseite mit dem vorderen Dachlenker 3' verbundene Stützplatte 43 bildet einen nach oben vorstehenden Hebelarm 44, an dem die in Figur 5 dargestellte Schwenkachse 7''' ausgebildet ist. Wie in Figur 9 dargestellt, ist der vordere Bereich des in Figur 5 dargestellten Lenkers 2' an der Innenseite der Stützplatte 43 um die Schwenkachse 7''' schwenkbar angeordnet. Die Schwenkachse 7''' ist durch einen Bolzen 46 gebildet, der von entsprechenden koaxialen Öffnungen 45, 45' im Lenker 2' und im Hebelarm 44 aufgenommen ist.

Die Erfindung ist keineswegs auf die angegebenen Ausführungsbeispiele beschränkt zu sehen. Der Aufbau des Verdeckgestänges oder des Tragrahmens ist lediglich beispielhaft angegeben. Bei einem Faltverdeck mit einem im wesentlichen dem zweiten Ausführungsbeispiel entsprechenden Schiebe- und-/oder Hebedach, bzw. einem Solardach, können die Lenker wie im ersten Ausführungsbeispiel zu einem weiteren Tragrahmen verbunden sein, an dem ein Ski- oder Gepäckträger zu befestigen ist. Bei einem Fahrzeugdach mit jeweils einem seitlichen vorderen und hinteren Dachlenker könnten aber auch nur die hinteren Dachlenker oder die hinteren Dachlenker zusätzlich zu einem Tragrahmen verbunden sein. Es ist nicht erforderlich, daß das Faltverdeck wie bei den Ausführungsbeispielen bei Nichtgebrauch in ein Aufnahmefach eingebracht werden kann. Ist das Faltverdeck mit einem Schiebe- oder Schiebehebedach ausgestattet, kann am vorderen Rand der dem Deckel des Schiebe- oder Schiebehebedaches zugeordneten Dachöffnung ein im wesentlichen schwenkbarer Windabweiser vorgesehen sein, der sich beim Öffnen der Dachöffnung ausstellt.

**Ansprüche**

1. Faltverdeck eines Kraftfahrzeugs, mit einem Verdeckgestänge, das einen vorderen Querspriegel (23) und an beiden hinteren Seitenbereichen je einen um eine Querachse (5') schwenkbaren Hauptlenker (8) aufweist, mit je einem zwischen einem Hauptlenker (8) und dem vorderen Querspriegel (23) angeordneten Längslenker (2, 3'), der in Schließstellung des Faltverdecks etwa in Fahrzeuglängsrichtung verläuft, dadurch gekennzeichnet, daß die beiden seitlich gegenüberliegenden Längslenker (Lenker 2, Dachlenker 3') zu einem Tragrahmen (9, 9') verbunden sind.

2. Faltverdeck nach Anspruch 1, dadurch gekennzeichnet, daß der Tragrahmen (9, 9') eine die vorderen Endbereiche der Längslenker (Lenker 2, Dachlenker 3') verbindende vordere Querstrebe (10, 10') und eine die hinteren Endbereiche der Längslenker (Lenker 2, Dachlenker 3') verbindende hintere Querstrebe (11, 11') aufweist.

3. Faltverdeck nach Anspruch 2, dadurch gekennzeichnet, daß die seitlichen Bereiche der vorderen und hinteren Querstrebe (10, 10', 11, 11') über je eine Längsstrebe (12, 12') verbunden sind.

4. Faltverdeck nach Anspruch 3, dadurch gekennzeichnet, daß die Längsstrebe (12, 12') etwa in Fahrzeuglängsrichtung verläuft.

5. Faltverdeck nach Anspruch 1, dadurch gekennzeichnet, daß der Tragrahmen (9, 9') ein mit Verstärkungselementen verbundenes Blechformteil ist.

6. Faltverdeck nach Anspruch 1, dadurch gekennzeichnet, daß der Tragrahmen (9, 9') der Form des geschlossenen Faltverdecks angepaßt ist und das Faltverdeck in Schließstellung stützt.

7. Faltverdeck nach Anspruch 1, mit je einem seitlichen Lenker, der an seinem vorderen Ende mit einem vorderen Dachlenker und an seinem hinteren Ende mit einer um eine Querachse schwenkbaren Hauptsäule gelenkig verbunden ist, dadurch gekennzeichnet, daß die beiden Lenker (2) die Längslenker bilden.

8. Faltverdeck nach Anspruch 7, dadurch gekennzeichnet, daß der Tragrahmen (9) in Schließstellung des Faltverdecks an seinen vorderen und hinteren Seitenbereichen mit Tragarmen (15) eines oberhalb des geschlossenen Faltverdecks -angeordneten Gepäckträgers verbindbar ist, die Öffnungen (16) im Faltverdeck durchbringen.

9. Faltverdeck nach Anspruch 8, dadurch gekennzeichnet, daß die Öffnungen (16) von Dichtungselementen verschließbar sind, die in die Öffnungen (16) einschraubbar, einsteckbar oder einclipsbar sind.

10. Faltverdeck nach Anspruch 1, mit je einem seitlichen, vorne mit dem Querspriegel verbundenen vorderen Dachlenker, der an seinem hinteren Ende mit dem vorderen Bereich eines hinteren Dachlenkers gelenkig verbunden ist, der hinten an dem zugeordneten Hauptlenker gelenkig befestigt ist, dadurch gekennzeichnet, daß die Längslenker durch die vorderen Dachlenker (3') gebildet sind.

11. Faltverdeck nach Anspruch 10, dadurch gekennzeichnet, daß der Tragrahmen (9') ein Solardach oder ein Schiebe- und/oder Hebedach aufnimmt, das einer Dachöffnung im Faltverdeck zugeordnet ist.

12. Faltverdeck nach Anspruch 7 oder 10, dadurch gekennzeichnet, daß an der Innenseite des Tragrahmens ein Stoff- oder Formhimmel (Verkleidungsteile 33, 33', 33", 33''', 33'^V) befestigt ist.

**Claims**

1. A folding top of a motor vehicle, with a top linkage, which has a front transverse support (23) and on both rear lateral regions in each case a main guide (8) swingable about a transverse axis (5'), with in each case a longitudinal guide (2, 3') arranged between a main guide (8) and the front transverse support (23), which longitudinal guide in the closed position of the folding top runs approximately in the longitudinal direction of the vehicle, characterised in that the two laterally-opposite longitudinal guides (guide 2, roof guide 3') are connected to a support frame (9, 9').

2. A folding top according to Claim 1, characterised in that the support frame (9, 9') has a front transverse strut (10, 10') connecting the front end regions of the longitudinal guides (guide 2, roof guide 3') and a rear transverse strut (11, 11') connecting the rear end regions of the longitudinal guides (guide 2, roof guide 3').

3. A folding top according to Claim 2, characterised in that the lateral regions of the front and rear transverse strut (10, 10', 11, 11') are connected in each case via a longitudinal strut (12, 12').

4. A folding top according to Claim 3, characterised in that the longitudinal strut (12, 12') runs approximately in longitudinal direction of the vehicle.

5. A folding top according to Claim 1, characterised in that the support frame (9, 9') is a shaped part of sheet metal connected with reinforcement elements.

6. A folding top according to Claim 1, characterised in that the support frame (9, 9') is adapted to the shape of the closed folding top and supports the folding top in closed position.

7. A folding top according to Claim 1, with in each case a lateral guide which is articulatedly connected at its front end with a front roof guide and at its rear end with a main column which is swingable about a transverse axis, characterised in that the two guides (2) form the longitudinal guides.

8. A folding top according to Claim 7, characterised in that the support frame (9) in the closed position of the folding top is able to be connected at its front and rear lateral regions with support arms (15) of a luggage carrier arranged above the closed folding top, penetrating openings (16) in the folding top.

9. A folding top according to Claim 8, characterised in that the openings (16) are able to be closed by sealing elements which are able to be screwed, inserted or clipped into the openings (16).

10. A folding top according to Claim 1, with in each case a lateral front roof guide connected at the front with the transverse support, which roof guide at its rear end is articulatedly connected with the front region of a rear roof guide which is articulatedly attached at the rear to the associated main guide, characterised in that the longititinal guides are formed by the front roof guides (3').

11. A folding top according to Claim 10, characterised in that the support frame (9') holds a solar roof or a sliding-and/or lifting roof which is associated with a roof opening in the folding top.

12. A folding top according to Claim 7 or 10, characterised in that, on the inner side of the support frame, a material-or shaped canopy (lining pieces 33, 33', 33'', 33''', 33'ᵛ)is attached.

**Revendications**

1. Capote pliante d'un véhicule automobile pourvue d'une tringlerie de capote, qui présente un arceau transversal (21) et, respectivement, sur les deux régions latérales arrière, un bras articulé principal (8) pivotant autour d'un axe transversal (5') avec respectivement un bras longitudinal (2, 3') disposé entre un bras principal (8) et l'arceau transversal (23) avant, qui, en position de fermeture de la capote pliante, s'étend approximativement suivant la direction longitudinale du véhicule, caractérisée en ce que les deux bras longitudinaux (bras 2, bras de toit 3') situés latéralement en regard sont reliés à un cadre porteur (9, 9').

2. Capote pliante selon la revendication 1, caractérisée en ce que le cadre porteur (9, 9') présente une traverse longitudinale avant (10, 10') reliant les zones d'extrémité avant des bras longitudinaux (bras 2, bras de toit 3') et une traverse longitudinale arrière (11, 11') reliant les zones d'extrémité arrière des bras longitudinaux (bras 2, bras de toit 3').

3. Capote pliante selon la revendication 2, caractérisée en ce que les zones latérales des traverses avant et arrière (10, 10' ; 11, 11') sont respectivement reliées par une traverse longitudinale (12, 12').

4. Capote pliante selon la revendication 3, caractérisée en ce que la traverse longitudinale (12, 12') s'étend sensiblement suivant la direction longitudinale du véhicule.

5. Capote pliante selon la revendication 1, caractérisée en ce que le cadre porteur (9, 9') est une pièce en tôle profilée reliée à des éléments de renforcement.

6. Capote pliante selon la revendication 1, caractérisée en ce que le cadre porteur (9, 9') est adapté à la forme de la capote pliante fermée et étaye la capote en position de fermeture.

7. Capote pliante selon la revendication 1 comportant respectivement un bras latéral qui est relié par une articulation à son extrémité avant à un bras de toit avant et, à son extrémité arrière, à un montant principal pivotant autour d'un axe transversal, caractérisée en ce que les deux bras articulés (2) constituent les bras longitudinaux.

8. Capote pliante selon la revendication 7, caractérisée en ce que le cadre porteur (9) peut, en position de fermeture de la capote pliante, être relié, par ses zones latérales avant et arrière, à des bras d'appui (15) d'un porte-bagages disposé au-dessus de la capote formée, qui traversent les ouvertures (16) aménagées dans la capote.

9. Capote pliante selon la revendication 8, caractérisée en ce que les ouvertures (16) peuvent être fermées par des éléments d'étanchéité qui peuvent être vissés enfichés ou pourvus d'un étrier de serrage.

10. Capote pliante selon la revendication 1, comprenant respectivement un bras de toit avant relié en avant à l'arceau transversal, dont l'extrémité arrière est reliée par une articulation à la région avant d'un bras de toit arrière, qui est fixé par une articulation à l'arrière, au montant principal associé, caractérisée en ce que les bras longitudinaux sont constitués par les bras de toit (3') avant.

11. Capote pliante selon la revendication 10, caractérisée en ce que le cadre porteur (9') reçoit un toit solaire ou un toit coulissant et/ou un toit ouvrant qui est associé à une ouverture de toit dans la capote pliante.

12. Capote pliante selon les revendications 7 à 10, caractérisée en ce qu'il est fixé sur la face intérieure du cadre porteur un habillage en tissu ou façonné (parties de revêtement 33, 33', 33'', 33''', 33'ᵛ).

Fig. 1

Fig. 2

Fig. 3

Fig. 4

Fig. 5

EP 0 332 811 B1

Fig. 6

Fig. 7

Fig.8

EP 0 332 811 B1

EP 0 332 811 B1

Fig. 9

13